Europäisches Patentamt

**European Patent Office**

Office européen des brevets

(11) Publication number: **0 234 624 B1**

# EUROPEAN PATENT SPECIFICATION

(45) Date of publication of patent specification: **27.11.91**

(51) Int. Cl.⁵: **G02F 1/137**, G02F 1/133, G09G 3/36

(21) Application number: **87200146.6**

(22) Date of filing: **02.02.87**

(54) **Liquid crystal device.**

(30) Priority: **06.02.86 NL 8600284**

(43) Date of publication of application:
**02.09.87 Bulletin 87/36**

(45) Publication of the grant of the patent:
**27.11.91 Bulletin 91/48**

(84) Designated Contracting States:
**DE FR GB IT**

(56) References cited:
**EP-A- 0 155 033**
**GB-A- 2 117 157**

(73) Proprietor: **N.V. Philips' Gloeilampenfabrieken**
**Groenewoudseweg 1**
**NL-5621 BA Eindhoven(NL)**

(72) Inventor: **Aartsen, Reinder Gerrit**
**c/o INT. OCTROOIBUREAU B.V. Prof. Holst-**
**laan 6**
**NL-5656 AA Eindhoven(NL)**
Inventor: **van Sprang, Hendrik Adrianus**
**c/o INT. OCTROOIBUREAU B.V. Prof. Holst-**
**laan 6**
**NL-5656 AA Eindhoven(NL)**

(74) Representative: **Raap, Adriaan Yde et al**
**INTERNATIONAAL OCTROOIBUREAU B.V.**
**Prof. Holstlaan 6**
**NL-5656 AA Eindhoven(NL)**

## Description

The invention relates to a liquid crystal device comprising two parallel supporting plates which are kept spaced apart at a distance d and have facing surfaces provided with electrodes defining segments, a layer of a nematic liquid crystal with a cholesteric addition between the supporting plates, said liquid crystal having a positive dielectric anisotropy and a natural pitch P, the ratio $d/p$ having a value between 0.5 and 1, the said surfaces being provided with an orientation layer to cause a progressive molecular twist of the liquid crystal molecules, wherein the twist can be represented by its director, across the layer thickness d of greater than $\pi$ and less than $2\pi$ radians, the director assuming a tilt-angle between $0°$ and $70°$ at one surface and a tilt-angle between $5°$ and $70°$ at the other surface with respect to the surfaces in question, in which device upon applying an electric field the liquid crystal device below an effective electric field strength $E_1$ is in a first stable state, above an effective field strength $E_2$ is in a second stable state of different optical transmission compared to the first stable state and at an effective field strength $E_H$ between $E_1$ and $E_2$ depending on the preceding stable state, may be either in the first or the second stable state and in which device the liquid crystal, starting from the first stable state and with an effective field strength applied across the liquid crystal has a small energy threshold such that with an electric pulse having an energy content above the said energy threshold, the liquid crystal can be switched from the first stable state to the second stable state, whereas with an electric pulse having an energy content below said energy threshold the liquid crystal returns to the first stable state via a metastable state having a certain relaxation period, on the condition that the recurrence frequency with which the liquid crystal is driven does not exceed the reciprocal value of the relaxation period.

Such a device may be used, for example, in an opto-electronic shutter or in so-called segment displays in which the form of the electrodes also determines the form of the symbols to be displayed.

The device is also suitable for matrix-display devices. Such a device has been described in Netherlands Patent Application No. 8400577 in the name of the Applicant (EP-A-0 155 033).

The transmission-voltage characteristic of the liquid crystal used in this device shows hysteresis. Consequently the display cells of the device are in a first stable state below a given field strength $E_1$ and in a second state optically differing therefrom above a field strength $E_2$. At a field strength $E_H$ between $E_1$ and $E_2$ both states my coexist. Starting from the first state and a field strength $E_H$ across the display cells, the liquid crystal material shows a small energy threshold. A cell can be switched from the first stable state to the second by means of a pulsatory electric field having an energy content above this threshold. With the pulsatory field having an energy content below the threshold the cell returns to the initial state with a certain relaxation period.

Dependent on the type of liquid crystal material and the presence of dyes and (possibly) polarisers, a display cell can switch between a substantially fully light-absorbing (first) state and a substantially fully light-transmitting (second) state so that, for example, a deep colour can be obtained on a white picture.

A drawback of the device and the associated drive mode described in said Patent Application is that the picture cells only switch between two states and that it is not possible to display intermediate states (variations in brightness, grey-tints).

It is an object of the invention to provide a liquid crystal device of the type described above in which a plurality of stable transmission states between the first and the second state can exist so that variations in brightness or grey-tints can be displayed.

To this end a liquid crystal device according to the invention is characterized in that at least one of said orientation layers is inhomogeneous on a microscopic scale, i.e. inhomogeneous within the size of a segment, so that said second stable state provides, on the scale of a segment, a predetermined optical transmission which is a function of the energy content of the electric pulse applied to the electrodes defining said segment.

The electrodes on both surfaces may form patterns of line and column electrodes, which define a matrix of picture cells at their crossing-points.

The invention is based on the recognition that due to microscopic variations in homogeneity of the orientation layer(s) the liquid crystal switches at each point with a slightly different voltage pulse. As a result regions occur locally where the segment (cell) has already switched to the second state, whilst the transmission of the liquid crystal segment (the picture cell) as a whole has hardly changed. As the energy content of the voltage pulse increases, the liquid crystal switches at a plurality of places and the segment (the cell), viewed macroscopically, can assume various intermediate transmission values (colour variations, grey-tints).

In the matrix display device the variable energy content is obtained by a combination of the drive voltage and the period during which this drive voltage is present at the column electrodes. To this end such a liquid crystal display device is characterized in that it comprises a line scanning circuit for successively and periodically scanning the line electrodes with a line selection pulse of the voltage $V_1$, in that it comprises column selection means for selecting those picture cells which are to be switched from the first stable state to the second stable state or to a predetermined optical transmission state, which column selection means supply to each of the column electrodes a voltage pulse $V_c$ in such manner that of the picture cells which are connected to an instantaneously scanned line electrode selected picture cells carry a first or off-voltage $V_1$-$V_c$, or a second or on-voltage $V_1$ + $V_c$ during the scanning period, or carry the first and second voltages in a time ratio determining the predetermined optical transmission, whereas all other cells carry a voltage +$V_c$, which voltage pulses of the value $V_1$ + $V_c$ have an energy content which exceeds the said energy threshold, those of the value $V_1$-$V_c$ have an energy content lower than the said energy threshold, and those of the value $V_c$ result in the effective field strength $E_H$, the display device furthermore comprising means for supplying, prior to displaying new information, a blanking pulse to all picture cells in such manner that these are brought to the first stable state.

The inhomogeneous layer comprises, for example, silicon oxide which has been vapour-deposited at an angle of between 80° and 86° relative to the normal on the surface.

The optical difference between display cells in the "off" state (first state) and those in the "on" state (second state) consists of a difference in the light transmission of the cells. This is obtained by using dichroic dyes, polarisers or a combination thereof. If a dichroic dye is added to the liquid crystal material, a display device of the Guest-Host type is obtained. If necessary, for increasing the contrast, a polariser may be provided on the front side, i.e. the side where the light enters the display device. It is furthermore possible to use the display device in the transmission mode or in the reflection mode, either in combination or not in combination with a polariser provided on the front side. In the reflection mode a light-reflecting layer is present on the rear side of the display device. According to again another embodiment the liquid crystal material does not comprise a dichroic dye, but the optical properties of the liquid crystal material, for example, birefringence ($\Delta n$) and the rotation of the plane of polarisation coupled thereto are used. In this case also the display device may be operated optionally in the transmission mode or in the reflection mode. In the former case the display device is placed between two linear polarisers and the relative position of the polarisers determines whether a selected display cell is displayed as a light cell or a dark cell with respect to a non-selected display cell. In the latter case the display device comprises a polariser on the front side and a reflector on the rear side or an internal reflector on the inner surface of the rear supporting plate. It is also possible to use two polarisers of which the polariser placed on the rear side is reflecting. The relative position of the polarisers then determines whether a selected display cell is displayed as light on a dark background or as dark on a light background. In the case of two linear polarisers their relative position may be optimized in view of the desired colour contrast as a result of the birefringent properties of the liquid crystal material in combination with the mutual position of the polarisers, i.e. the mutual angular rotation. With respect to a parallel or orthogonal position of the polarisers, deviations up to 45° from the polariser positions may be necessary depending on the product d. $\Delta n$ for an optimum contrast. With an effect which is partially based on birefringence, contrast is also observed, of course, when one polariser is used in combination with a reflector.

The invention will now be described in greater detail with reference to various embodiments and the accompanying drawings in which

Fig. 1 diagrammatically shows a liquid crystal device according to the invention,

Fig. 2 shows the voltage-transmission characteristic curve associated with the device of Fig. 1,

Fig. 3 diagrammtically shows the variation of the transmission in time, if a device according to Fig. 1 is driven by pulsatory signals having various pulse heights,

Fig. 4a-4f show impressions on a macroscopic scale of the associated transmission behaviour,

Fig. 5 shows the relationship between the inverse value of the pulse duration and the square value of the voltage above the energy threshold, whilst

Fig. 6 diagrammatically shows a matrix display device according to the invention, and

Fig. 7 diagrammatically shows the voltage used therewith.

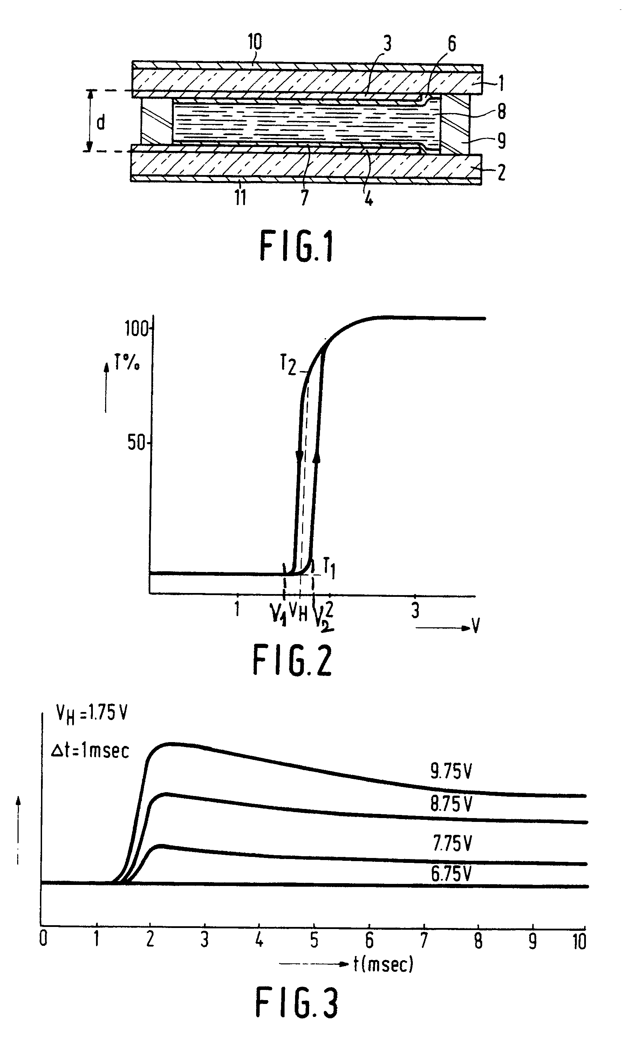

The liquid crystal device shown in Fig. 1 comprises two glass supporting plates 1 and 2 comprising electrodes 3 and 4 consisting of indium-tin oxide. A silicon oxide layer is vapour-deposited over the surfaces of the supporting plates 1 and 2 comprising electrodes, the layer being deposited at an angle of 80°-86° to the normal on the surface. The layers constitute the orientation layers 6 and 7. A liquid crystal material 8 consisting of a mixture of the nematic liquid crystal ZLI 1132 of E.Merck and the cholesteric addition n-cyano-4´,(2-methyl)-isobutyl-biphenyl (CB 15) is present between the supporting plates. The spacing, d, between the plates is 6.9 $\mu$m, which is maintained by spacing means which are distributed regularly over the surfaces of the plates and are not shown in the drawing. The spacing d is approximately equal to the thickness of the liquid crystal layer. Although the electrodes 3,4 and orienting layers 6,7 have a total thickness of ca 0.3 $\mu$m said electrodes and orienting layers are impressed by the spaces in such a way that the effective thickness of the liquid crystal layer approximately equals d. A sealing edge 9 joins the supporting plates together at their circumference. So much n-cyano-4'(2-methyl)-isobutyl-biphenyl (obtainable under the name CB15 from BHD-Chemicals) has been added to the nematic liquid crystal that the pitch p of the helix over which the liquid crystal molecules perform a rotation of 2 $\pi$ radians is approximately 9.2 $\mu$m. Hence, the ratio d/p is approximately 0.75. The director at the orientation layer 6 is rotated with respect to the director at the layer 7 over an angle $\Phi$ equal to $\frac{3}{2}\pi$. As a result of the oblique obliquely vapour-deposited silicon oxide layers, these directors are not parallel to the surface but make an angle therewith, the so-called tilt-angle $\theta$ of approximately 30°. Although in the present example the twist $\Phi$ of the liquid crystal has been adapted to the wall conditions determined by the orientation layers, this is not a necessary condition. In other words, the ratio d/p does not need to be exactly equal to $\Phi/2\pi$. The supporting plates 1 and 2 furthermore each comprise a linear polariser, namely a polariser 10 and an analyser 11. The device can be switched from a first stable state to a second stable state differing optically therefrom by driving the electrodes 3 and 4 in a suitable manner.

As has been described in the said Patent Application, the transmission-voltage characteristic curve of such a liquid crystal device shows hysteresis. With a holding field $E_H$ corresponding to the voltage $V_H$ only a short-lasting pulse having a low energy content is required to bring the system from a first stable state into a second stable state.

Fig. 2 shows the transmission T of the liquid crystal device as a function of a voltage V applied across the device. Below a voltage $V_1$ (corresponding to an electric field $E_1$) the director is substantially parallel to the supporting plates 1 and 2. Above a voltage $V_2$ (corresponding to an electric field $E_2$) the director is rotated over an angle of approximately 90°, i.e. the director is substantially at right angles to the supporting plates 1 and 2. When the polarisers are parallel, the device assumes the first state below $V_1$, which in the given position of the polarisers is non-light-transmitting. This state represents the "off" state. Above a voltage $V_2$ the device assumes a second stable state which in the given position of the polarisers is light-transmitting. This state represents the "on" state. At a voltage between $V_1$ and $V_2$ the two states may occur simultaneously as a result of the hysteresis in the characteristic curve. The way in which this hysteresis is traversed at a voltage which first increases and then decreases is indicated by means of arrows in the characteristic curve. Coming from a high voltage, the "on" state will exist at the field streng strength $V_H$ (corresponding to an electric field $E_H$), whereas coming from a low voltage the "off" state will exist at the same voltage $V_H$.

A short-lasting pulse of a low energy content will suffice to realise a rapid transition from the first to the second state. These states are indicated by $T_1$ and $T_2$ in Fig.2, corresponding to the"off" and "on" states, respectively, of a cell. Fig. 2 shows statically taken characteristic curves in which the holding voltage $V_H$ corresponds to the holding field $E_H$ and a high transmission T corresponding to a large tilt-angle $\theta_m$. When a short-lasting pulse is applied to the device, the energy content of which does not exceed the said energy threshold, $\theta_m$ and hence the transmission T will initially increase for a moment and will then return to the initial value with a given relaxation period. The transmission returns to the initial state $T_1$ via a metastable phase with a given relaxation period which in this case is approximately 200 milliseconds. In order not to disturb this effect a second voltage pulse may not be applied during this relaxation period, because the energy threshold could then be exceeded. In order to prevent this, the recurrence frequency with which the device is driven may not exceed the reciprocal value of the relaxation period. In the present case this means a maximum recurrence frequency of approximately 5 Hz.

Since the orientation layers 6 and 7 are inhomogeneous in the device according to the invention, local differences occur in the interactions between this surface and the liquid crystal layer 8. As a result the energy content of the voltage pulse required to reach the state $T_2$ also varies. Consequently the liquid crystal will switch to the state $T_2$ at different voltages and at more or fewer places which, considered macroscopically, corresponds to a transmission between that of the states $T_1$ and $T_2$.

For the device of Fig. 1 this will be further described with reference to Fig. 3. In this case the value $V_H$ = 1.75 Volt has been chosen as the holding voltage, while the device was pulse-wise driven by means of pulses having an increasing voltage and a pulse-width of 1 millisecond. As is evident from Fig.3, voltage pulses having a voltage of 6.75 V or less do not have any influence on the transmission behaviour. With an increasing voltage $V_{pulse}$, however, the liquid crystal relaxes towards a higher transmission value dependent on the voltage

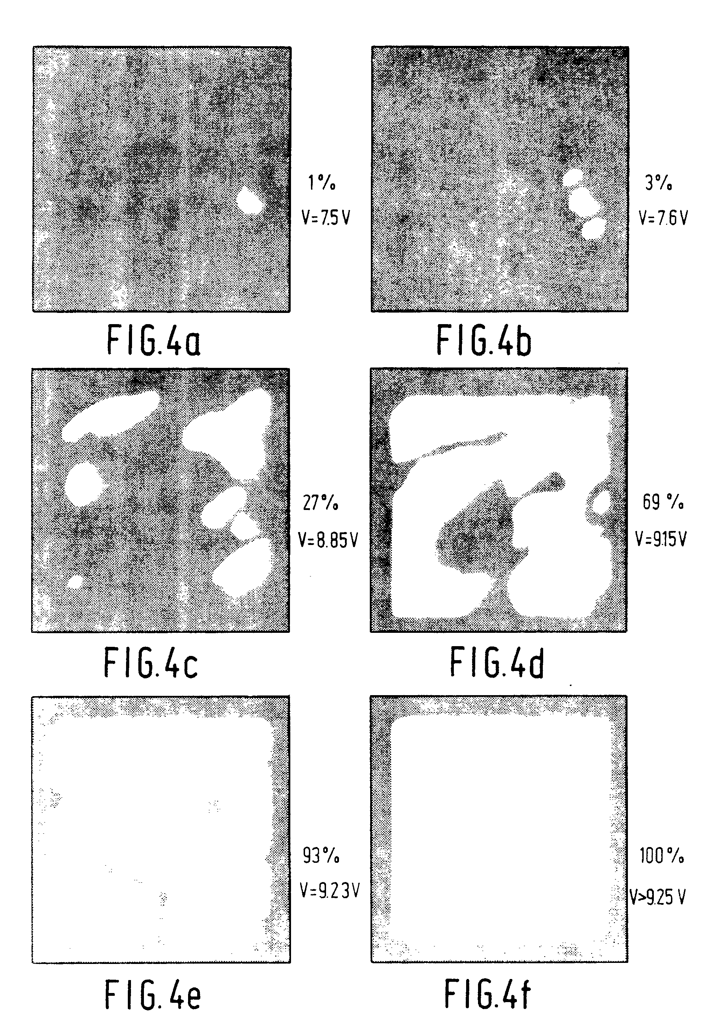

$V_{pulse}$. This is a result of local transitions in a microscopic scale, which is clearly apparent from Figs. 4a-4f in which a part of the device measuring 0.5 mm × 0.5 mm has been shown on a macroscopic scale for different voltage values $V_{pulse}$. The different pictures show different values of the transmission as a percentage of the transmission in the case of a fully switched device. The voltage $V_{pulse}$ used are also shown.

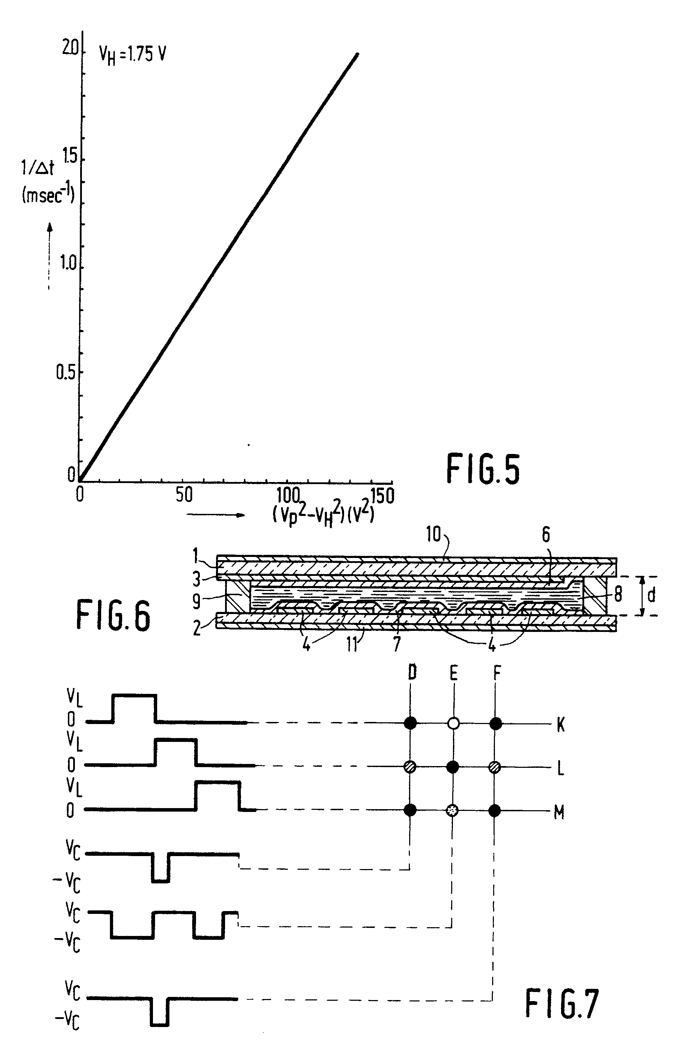

Measurements have proved that the quantity $\Delta t(V^2_{pulse}-V^2_H)$ is decisive of the quantity of energy supplied. This is shown with reference to Fig. 5 in which $\frac{1}{\Delta t}$ is plotted relative to $(V^2_{pulse}-V^2_H)$ for that value of $\Delta t(V^2_{pulse}-V^2_H)$ at which the device just switches fully. Since a substantially linear relationship is found therefor, the said quantity $\Delta t(V^2_{pulse}-V^2_H)$ is constant.

Notably in a matrix structure the pulse duration will be shorter and consequently the voltage consumed will be higher. Such a matrix display device is shown in Fig. 6. It also comprises two glass supporting plates 1 and 2. The supporting plate 1 comprises a pattern of strip-shaped electrodes 3 consisting of indium-tin oxide. The supporting plate 2 also comprises a pattern of strip-shaped electrodes 4 consisting of indium-tin oxide. The electrodes 3 cross the electrodes 4 and the crossings constitute display cells which are arranged according to a matrix. A silicon layer is vapour-deposited on the surfaces of the supporting plates 1 and 2 comprising electrodes, the layer being deposited at an angle of 80°-86° to the normal on the surface. The layers constitute the orientation layers 6 and 7. A similar liquid crystal material 8 as described with reference to Fig. 1 is present between the supporting plates. The spacing, d, between the plates is 6.9 μm, which is maintained by spacing means which are distributed regularly over the surfaces of the plates and are not shown in the drawing. A sealing edge 9 joins the supporting plates together at their circumference. The supporting plates 1 and 2 furthermore each comprise a linear polariser, namely a polariser 10 and an analyser 11. The display cells can be switched from a first stable state to a second stable state differing optically therefrom by driving the electrodes 3 and 4 in a suitable manner. With a parallel position of polariser and analyser, a selected display cell will be white(light-transmitting) on a dark background. By rotating one of the polarisers with respect to the other and by a suitable choice of the product d.Δn contrasts from deep blue on white to pale yellow on black can optionally be realized by means of the device described.

Fig. 7 shows the principle of the driving of a display device according to the invention. Three line electrodes K, L and M, as well as three column electrodes D, E and F are shown. A line selection pulse of the value $V_l$ is applied successively to the line electrodes K, L, M, while voltage pulses are applied to all column electrodes such that the desired brightness level (grey tint) is achieved. A voltage $+V_c$ is applied to non-selected columns, $V_c$ corresponding to the holding voltage $V_H$ of the liquid crystal material and being approximately 1.75 Volts again. A voltage $+V_c$ is presented to selected cells which do not switch on the column connection during the selection period, whereas a voltage $-V_c$ is presented to selected cells which switch fully. Voltages $+V_c$ and $-V_c$ are presented to cells which switch to an intermediate transmission level (grey value). The energy content of the pulse driving the selected cell and hence the brightness (grey tint) is determined by the period when the voltage $-V_c$ is present.

In Fig. 7 the cells KD, KF, LE, MD and MF are selected to an off-value and they remain substantially non-light-transmitting in this example. Throughout the selection period of the line K, the cell KE carries a voltage $V_l$ on the line electrode K and a voltage $-V_c$ on the column electrode E. The total voltage difference across the cell KE is thus $V_l + V_c$ during this period. The voltage and the period are chosen to be such that the cell switches fully.

The cells LD and LF having different energy contents are driven in the same manner, which contents are both smaller than that of the cell KE, notably because they are driven over a shorter period (approximately 1/3 of the line selection period). Due to the longer period of driving the cell KE, the associated energy content is greater so that KE is brighter than LF and LD. For similar reasons the cell ME also becomes substantially non-light-transmitting, be it to a slightly lesser extent than the cell KE, because the cell ME is not driven throughout the selection period with $V_c + V_l$. In all cases a voltage $\pm V_c$ is present across non-selected cells so that the adjusted state in accordance with the above-described mechanism is maintained. In the case in which the display device is to display fresh information changed with respect to old information, first all cells are brought in the "off" state by means of a short pulse. A pulse of zero volt and a pulse duration of $50.10^{-3}$ sec. proves to be sufficient for this purpose.

The data of the liquid crystal of the embodiment described may be summarised as follows: liquid crystal material ZLI 1132 with 1.45 % of CB15 d = 6.9 μm; O = 270°; d/p = 0.75; $\theta$ = 30° on both surfaces.
Other embodiments which satisfy the object of the invention are:
    a) Liquid crystal material ZLI 1132 + 0.68 % of CB15 d = 9 μm; $\Phi$ = 270°; d/p = 0.5; $\theta$ = 30° on both surfaces.
    b) Liquid crystal material ZLI 1132 + 1.16 % of CB15 d = 6.4 $\mu$m, $\Phi$ = 270$^{\circ}$; d/p = 0.6; $\theta$ = 1$^{\circ}$ and $\theta_2$ = 30$^{\circ}$.

c) Liquid crystal material ZLI 1132 + 1.16 % of CB15 d = 6.4 $\mu$m; $\Phi$ = 247$^{\circ}$; d/p = 0.6; $\theta$ = 30$^{\circ}$ on both surfaces.

d) Liquid crystal material ZLI 1840 + 1.45 % of CB15 d = 6.4 $\mu$m; $\Phi$ = 270$^{\circ}$; d/p = 0.75; $\theta$ = 30$^{\circ}$ on both surfaces.

## Claims

1. A liquid crystal device comprising two parallel supporting plates which are kept spaced apart at a distance d and have facing surfaces provided with electrodes defining segments, a layer of a nematic liquid crystal with a cholesteric addition between the supporting plates, said liquid crystal having a positive dielectric anisotropy and a natural pitch p, the ratio d/p having a value between 0.5 and 1, the said surfaces being provided with an orientation layer to cause a progressive molecular twist of the liquid crystal molecules, wherein the twist can be represented by its director, across the layer thickness d of greater than $\pi$ and less than $2\pi$ radians, the director assuming a tilt-angle between 0$^{\circ}$ and 70$^{\circ}$ at one surface and a tilt-angle between 5$^{\circ}$ and 70$^{\circ}$ at the other surface with respect to the surfaces in question, in which device upon applying an electric field the liquid crystal device below an effective electric field strength $E_1$ is in a first stable state, above an effective field strength $E_2$ is in a second stable state of different optical transmission compared to the first stable state and at an effective field strength $E_H$ between $E_1$ and $E_2$ depending on the preceding stable state, may be either in the first or the second stable state and in which device the liquid crystal, starting from the first stable state and with an effective field strength applied across the liquid crystal has a small energy threshold such that with an electric pulse having an energy content above the said energy threshold, the liquid crystal can be switched from the first stable state to the second stable state, whereas with an electric pulse having an energy content below said energy threshold the liquid crystal returns to the first stable state via a metastable state having a certain relaxation period, on the condition that the recurrence frequency with which the liquid crystal is driven does not exceed the reciprocal value of the relaxation period,

characterized in that

at least one of said orientation layers is inhomogeneous on a microscopic scale, i.e. inhomogeneous within the size of a segment, so that said second stable state provides, on the scale of a segment, a predetermined optical transmission which is a function of the energy content of the electric pulse applied to the electrodes defining said segment.

2. A liquid crystal device according to Claim 1, characterized in that the electrodes on one surface form a pattern of line electrodes and the electrodes on the other surface form a pattern of column electrodes in such a manner that the line electrodes cross the column electrodes defining a matrix of picture cells.

3. A liquid crystal display device as claimed in Claim 2, characterized in that it comprises a line scanning circuit for successively and periodically scanning the line electrodes with a line selection pulse of the voltage $V_1$, in that it comprises column selection means for selecting those picture cells which are to be switched from the first stable state to the second stable state or to a predetermined transmission state, which column selection means supply to each of the column electrodes a voltage pulse $V_c$ in such a manner that of the picture cells which are connected to an instantaneously scanned line electrode selected picture cells carry a first or off-voltage $V_1$-$V_c$, or a second or on-voltage $V_1$ + $V_c$ during the scanning period, or carry the first and second voltages in a time ratio determining the predetermined optical transmission, whereas all other cells carry a voltage + $V_c$ which voltage pulses of the value $V_1$ + $V_c$ have an energy content which exceeds the said energy threshold, those of the value $V_1$-$V_c$ have an energy content lower than the said energy threshold and those of the value $V_c$ result in the effective field strength $E_H$, the display device furthermore comprising means for supplying, prior to displaying new information, a blanking pulse to all picture cells in such manner that these are brought to the first stable state.

4. A liquid crystal device as claimed in any one of the preceding Claims, characterized in that the inhomogeneous layer consists of silicon oxide which is vapour-deposited at an angle of between 80$^{\circ}$ and 86$^{\circ}$ with respect to the normal on the surface.

5. A display device as claimed in Claim 1, 2, 3 or 4, characterized in that a dichroic dye is added to the liquid crystal material.

6. A display device as claimed in Claim 5, characterized in that a polariser is provided on the front supporting plate.

7. A display device as claimed in Claim 5 or 6, characterized in that a reflecting layer is provided on one of the surfaces of the rear supporting plate.

8. A display device as claimed in Claim 1, 2 or 3, charecterized in that a polariser is provided on the front supporting plate and a reflecting layer is provided on one of the surfaces of the rear supporting plate.

9. A display device as claimed in Claim 1, 2 or 3, characterized in that a polariser is provided on the front supporting plate and the rear supporting plate.

10. A display device as claimed in Claim 9, characterized in that a reflecting layer is provided on the rear supporting plate.

**Revendications**

1. Dispositif à cristal liquide comportant de plaques de support parallèles qui sont maintenues espacées à une distance d et qui présentent des surfaces en vis-à-vis munies d'électrodes définissant des segments, une couche d'un cristal liquide nématique avec une addition cholestérique entre les plaques de support, ledit cristal liquide présentant une anisotropie diélectrique positive et un pas naturel p, le rapport d/p présentant une valeur comprise entre 0,5 et 1, lesdites surfaces étant munies d'une couche d'orientation pour provoquer une torsion moléculaire progressive des molécules de cristal liquide, la torsion pouvant être représentée par son directeur, sur l'épaisseur de couche d supérieure à $\pi$ et inférieure à $2\pi$ radians, le directeur conférant un angle de basculement compris entre 0° et 70° à une surface et un angle de basculement compris entre 5° et 70° à l'autre surface par rapport aux surfaces en question, dispositif dans lequel, lors de l'application d'un champ électrique et au-dessous d'une intensité de champ électrique effective $E_1$, le dispositif à cristal liquide se trouve dans un premier état stable, au-dessus d'une intensité de champ effective $E_2$, il se trouve dans un deuxième état stable de transmission optique différente comparativement au premier état stable et à une intensité de champ effective $E_H$ comprise entre $E_1$ et $E_2$ dépendant de l'état stable précédant, il peut se trouver dans le premier état stable ou dans le deuxième état stable et dispositif dans lequel le cristal liquide, partant du premier état stable et à une intensité de champ effective appliquée aux extrémités du cristal liquide, présente un petit seuil d'énergie tel qu'avec une impulsion électrique présentant une capacité énergétique supérieure audit seuil d'énergie, le cristal liquide peut être porté à partir du premier état stable au deuxième état stable, alors qu'avec une impulsion électrique présentant une capacité énergétique inférieure audit seuil d'énergie, le cristal liquide retourne au premier état stable par l'intermédiaire de l'état métastable présentant une certaine période de relaxation à condition que la fréquence de récurrence à laquelle est commandé le cristal liquide ne dépasse pas la valeur réciproque de la période de relaxation, caractérisé en ce qu'au moins l'une desdites couches d'orientation est inhomogène sur une échelle microscopique, c'est-à-dire inhomogène dans les dimensions d'un segment, de sorte que ledit deuxième état stable fournit, à l'échelle d'un segment, une transmission optique prédéterminée qui est une fonction de la capacité énergétique de l'impulsion électrique appliquée aux électrodes définissant ledit segment.

2. Dispositif à cristal liquide selon la revendication 1, caractérisé en ce que les électrodes sur une surface constituent une configuration d'électrodes de ligne et les électrodes sur l'autre surface constituent une configuration d'électrodes de colonne de façon que les électrodes de ligne croisent les électrodes de colonne et que les points de croisement constituent une matrice de cellules d'image.

3. Dispositif d'affichage à cristal liquide selon la revendication 2, caractérisé en ce qu'il comporte un circuit de balayage de ligne pour le balayage successif et périodique des électrodes de ligne avec une impulsion de sélection de ligne de la tension $V_1$, en ce qu'il comporte des moyens de sélection de colonne pour la sélection des cellules d'image qui doivent être commutées à partir du premier état stable au deuxième état stable ou à un état de transmission optique prédéterminé, lesquels moyens de sélection de colonne amènent une impulsion de tension $V_c$ à chacune des électrodes de colonne de façon que des cellules d'image sélectionnées des cellules d'image connectées à une électrode de ligne balayée instantanément présentent une première tension ou tension de déclenchement $V_1$-$V_c$, ou une deuxième tension ou tension d'enclenchement $V_1$ + $V_c$ pendant la période de balayage, ou présentent les première et deuxième tensions dans un rapport de temps qui détermine la transmission optique prédéterminée, alors que toutes les autres cellules présentent une tension $+V_c$, lesquelles impulsions de tension de la valeur $V_1 + V_c$ présentent une capacité énergétique qui dépasse ledit seuil d'énergie, celles de la valeur $V_1 - V_c$ présentent une capacité énergétique inférieure audit seuil d'énergie et celles de la valeur $V_c$ se traduisent par l'intensité de champ effective $E_H$, le dispositif d'affichage comportant en outre des moyens pour amener, avant l'affichage d'une nouvelle information, une information de suppression à toutes les cellules d'image de façon que ces dernières soient portées au premier état stable.

4. Dispositif à cristal liquide selon l'une des revendications précédentes, caractérisé en ce que la couche inhomogène est constituée par de l'oxyde de silicium qui est déposé par vaporisation sous un angle compris entre 80° et 86° par rapport à la normale à la surface.

5. Dispositif d'affichage selon la revendication 1, 2, 3, ou 4, caractérisé en ce qu'un colorant dichroïque est ajouté au matériau cristallin liquide.

6. Dispositif d'affichage selon la revendication 5, caractérisé en ce qu'un polariseur est disposé sur la plaque de support avant.

7. Dispositif d'affichage selon la revendication 5 ou 6, caractérisé en ce qu'une couche réflectrice est appliquée sur l'une des surfaces de la plaque de support arrière.

8. Dispositif d'affichage selon la revendication 1, 2 ou 3, caractérisé en ce qu'un polariseur est disposé sur la plaque de support avant et une couche réflectrice est appliquée sur l'une des surfaces de la plaque de support arrière.

9. Dispositif d'affichage selon la revendication 1, 2 ou 3, caractérisé en ce qu'un polariseur est disposé sur la plaque de support avant et la plaque de support arrière.

10. Dispositif d'affichage selon la revendication 9, caractérisé en ce qu'une couche réflectrice est appliquée sur la plaque de support arrière.

## Patentansprüche

1. Flüssigkristallvorrichtung mit zwei in einem Abstand d voneinander liegenden parallelen Trägerplatten mit einander zugewandten Oberflächen mit Elektroden definierenden Segmenten, wobei sich zwischen den Trägerplatten eine Schicht nematischen Flüssigkristalls mit einer cholesterischen Hinzufügung befindet, wobei das Flüssigkristall eine positive dielektrische Anisotropie aufweist, sowie eine natürliche Steigung p, wobei das Verhältnis d/p einen Wert zwischen 0,5 und 1 hat, wobei die genannten Oberflächen mit einer Orientierungsschicht versehen sind, wodurch eine progressive Molekularverdrehung der Flüssigkristallmoleküle über die Schichtdicke d von mehr als $\pi$ und weniger als $2\pi$ Radialen verursacht wird, wobei die Verdrehung durch den Direktor dargestellt werden kann, wobei vorausgesetzt wird, daß der Direktor an der einen Oberfläche einen Neigungswinkel zwischen 0° und 70° und an der anderen Oberfläche einen Neigungswinkel zwischen 5° und 70° gegenüber den betreffenden Oberflächen hat, wobei in dieser Vorrichtung beim Anlegen eines elektrischen Feldes unterhalb einer effektiven elektrischen Feldstärke $E_1$ die Flüssigkristallvorrichtung in einem ersten stabilen Zustand ist, oberhalb einer effektiven Feldstärke $E_2$ in einem zweiten optisch davon abweichenden stabilen Zustand ist und bei einer effektiven Feldstärke $E_H$ zwischen $E_1$ und $E_2$ je nach dem vorhergehenden stabilen Zustand, in dem ersten oder zweiten stabilen Zustand ist und wobei in dieser Vorrichtung der Flüssigkristall, ausgehend von dem ersten stabilen Zustand und bei einer an den Flüssigkristall angelegten effektiven Feldstärke, eine niedrige Energieschwelle hat, so daß der Flüssigkristall bei einem elektrischen Impuls mit einem Energieinhalt über der genannten Energieschwelle aus dem ersten in den zweiten stabilen Zustand geschaltet werden kann, während der Flüssigkristall bei einem elektrischen Impuls mit einem Energieinhalt unterhalb der genannten Energieschwelle über einen metastabilen Zustand mit einer bestimmten Relaxationsperiode in den ersten stabilen Zustand zurückkehrt, unter der Bedingung aber, daß die Wiederholungsfrequenz, mit der der Flüssigkristall betrieben wird, den Reziprokwert der Relaxationsperiode nicht überschreitet, dadurch gekennzeichnet, daß

wenigstens eine der genannten Orientierungsschichten in mikroskopischem Maßstab inhomogen ist, d.h. inhomogen innerhalb der Größe eines Segmentes, so daß der genannte zweite stabile Zustand, im Maßstab eines Segmentes, eine vorbestimmte optische Übertragung herbeiführt, die eine Funktion des Energieinhaltes des elektrischen Impulses ist, der dem genannten, die Elektroden definierenden Segment zugeführt wurde.

2. Flüssigkristallvorrichtung nach Anspruch 1, dadurch gekennzeichnet, daß die Elektroden auf der einen Oberfläche ein Muster von Reihenelektroden bilden und die Elektroden auf der anderen Oberfläche ein Muster von Spaltenelektroden bilden, derart, daß die Reihenelektroden die Spaltenelektroden kreuzen und dadurch eine Matrix von Bildzellen bilden.

3. Flüssigkristallvorrichtung nach Anspruch 2, dadurch gekennzeichnet, daß sie eine Zeilenabtastschaltung aufweist um aufeinanderfolgend und periodisch die Reihenelektroden abzutasten mit einem Zeilenselektionsimpuls der Spannung $V_1$, daß sie Spaltenselektionsmittel aufweist zum Selektieren derjenigen Bildzellen, die aus dem ersten stabilen Zustand in den zweiten stabilen Zustand oder aber in einen vorbestimmten Übertragungszustand geschaltet werden müssen, wobei diese Spaltenselektionsmittel jeder der Spaltenelektroden einen Spannungsimpuls $V_c$ zuführen, derart, daß von den Bildzellen, die mit einem augenblicklich abgetasteten Reihenelektroden verbunden sind, selektierte Bildzellen während der Abtastperiode eine erste oder AUS-Spannung $V_1-V_c$ oder eine zweite oder EIN-Spannung $V_1+V_c$ führen, oder die erste und zweite Spannung in einem Zeitverhältnis führen, das die vorbestimmte optische Übertragung bestimmt, während alle übrigen Zellen eine Spannung $+V_c$ führen, wobei Spannungsimpulse mit dem Wert $V_1+V_c$ einen Energieinhalt haben, der die genannte Energieschwelle überschreitet, wobei diejenigen mit dem Wert $V_1-V_c$ einen Energieinhalt haben, der niedriger ist als die genannte Energieschwelle und diejenigen mit dem Wert $V_c$ zu der effektiven Feldstärke $E_H$ führen, wobei die Wiedergabevorrichtung weiterhin Mittel aufweist, vor der Wiedergabe neuer Information allen Bildzellen einen Austastimpuls zuzuführen, derart, daß diese in den ersten stabilen Zustand gebracht werden.

4. Flüssigkristallvorrichtung nach einem der vorstehenden Ansprüche, dadurch gekennzeichnet, daß die inhomogene Schicht aus Siliziumoxid besteht, das in einem Winkel zwischen 80° und 86° gegenüber der Normale der Oberfläche aufgedampft wurde.

5. Wiedergabevorrichtung nach Anspruch 1, 2, 3 oder 4, dadurch gekennzeichnet, daß dem Flüssigkristallmaterial ein dichroitischer Farbstoff hinzugefügt ist.

6. Wiedergabevorrichtung nach Anspruch 5, dadurch gekennzeichnet, daß auf der vorderen Trägerplatte ein Polarisator vorgesehen ist.

7. Wiedergabevorrichtung nach Anspruch 5 oder 6, dadurch gekennzeichnet, daß auf einer der Oberflächen der hinteren Trägerplatte eine reflektierende Schicht vorgesehen ist.

8. Wiedergabevorrichtung nach Anspruch 1, 2 oder 3, dadurch gekennzeichnet, daß auf der vorderen Trägerplatte ein Polarisator und auf einer der Oberflächen der hinteren trägerplatte eine reflektierende Schicht vorgesehen ist.

9. Wiedergabevorrichtung nach Anspruch 1, 2 oder 3, dadurch gekennzeichnet, daß auf der vorderen Trägerplatte und auf der hinteren Trägerplatte ein Polarisator vorgesehen ist.

10. Wiedergabevorrichtung nach Anspruch 9, dadurch gekennzeichnet, daß auf der hinteren Trägerplatte eine reflektierende Schicht vorgesehen ist.

FIG.1

FIG.2

FIG.3

1%
V=7.5 V

FIG.4a

3%
V=7.6 V

FIG.4b

27%
V=8.85V

FIG.4c

69 %
V=9.15V

FIG.4d

93%
V=9.23V

FIG.4e

100%
V>9.25 V

FIG.4f

**FIG.5**

$V_H = 1.75\ V$

$1/\triangle t$ $(msec^{-1})$

$(V_P{}^2 - V_H{}^2)(V^2)$

**FIG.6**

**FIG.7**